# EUROPEAN PATENT SPECIFICATION

(11) **EP 3 876 793 B1**
(45) Date of publication and mention of the grant of the patent: **13.05.2026**
(21) Application number: 19816983.1
(22) Date of filing: 08.11.2019
(51) Int. Cl.: A47C 17/52, A47C 17/84, A47C 17/86, A47C 21/00, A47C 19/22

(54) **FURNITURE ITEM AND METHOD OF OPERATING A FURNITURE ITEM**
MÖBELSTÜCK UND VERFAHREN ZUM BETREIBEN EINES MÖBELSTÜCKS
ARTICLE D'AMEUBLEMENT ET PROCÉDÉ D'UTILISATION D'UN ARTICLE D'AMEUBLEMENT

(30) Priority: 09.11.2018 US 201862757964 P
(43) Date of publication of application: 15.09.2021
(73) Proprietor: Ori Inc., Boston, MA 02210 (US)
(72) Inventor: RUBIO, Carlos, Boston, MA 02215 (US); BEAN, Chad, Cambridge, MA 02139 (US); FERNANDEZ DE CASADEVANTE, Ivan, Cambridge, MA 02139 (US); LARREA-TAMAYO, Hasier, Cambridge, MA 02139 (US); HSIUNG, Robert, T., Cambridge, MA 02139 (US); RITTS, Daniel, Bellingham, MA 02019 (US)
(74) Representative: Barker Brettell LLP
(86) International application number: PCT/US2019/060553
(87) International publication number: WO 2020/097517

(56) References cited:
- CN-A- 107 280 323
- JP-A- 2004 016 749
- JP-U- S5 259 005

## Description

### TECHNICAL FIELD

The invention relates to techniques for moving and transforming furniture items in a safe and reliable manner.

### BACKGROUND

Motor-operated, modular home and office furniture is becoming more abundant in today's world. For example, office desks provide motorized lifts to raise and lower desks, allowing both standing and sitting workspaces. Other examples include moveable walls in function rooms and conference centers, allowing reconfiguration and resizing to meet specific demands. However, such implementations are designed for industrial environments and do not consider the variety of consumer/residential environments, or other settings in which furniture is typically placed, such as hotel rooms or retail space, or more specialized environments such as hospitals or elder care facilities, or the need for user-friendly controls. Design aspects such as conveniently placed outlets and accessory lighting are overlooked, and the use of plastic or metal cable carriers may provide a robust design, but are not suitable for the everyday home and office environment. Movable furniture also presents a safety hazard as it can collide with humans and/or objects to harmful effect.

Accordingly, there is a need for improved systems and methods for operating moveable furniture and interior architectural items to accommodate its increased usage in non-industrial settings.

JP 2004016749 A1 discloses a bed apparatus having a floor raising / lowering function.

JP S5259005 U discloses a bed with a lifting device that can use the room without interrupting the light of the window by quickly raising the bed near the ceiling in the daytime.

CN 107280323 A discloses a lifting bed and a home furnishing system that can raise the utilization rate of the space in the room by raising the bed to the ceiling to solve the problem that the space occupied by the bed cannot be occupied. When the lifting bed rises to the ceiling, the space occupied by the bed can be transformed into extra space in the living room,

### SUMMARY

This disclosure describes an improved moveable architectural element system and operating techniques by incorporating features that solve many of the problems in existing moveable furniture items. The improved features are implemented throughout various elements of the system, including hardware elements, controller elements, and/or software elements.

According to the invention a furniture item includes a vertical wall structure; a horizontal structure cantilevered off of the vertical wall structure and adapted to vertically translate along the vertical wall structure; and a pivot point about which the furniture item is configured to pivot upon application of a sufficient normal force to the horizontal structure, wherein a center of gravity of the furniture item is disposed in a location such that a normal force applied to the horizontal structure upon vertical translation of the horizontal structure under a normal operating condition is less than the sufficient normal force.

In various embodiments, the vertical wall structure houses a translating structure, according to the invention a motor configured to drive a pulley or a cable is adapted to vertically translate the horizontal structure along the vertical wall structure. In some cases, the normal operating condition of the motor includes a motor speed below a predetermined maximum motor speed and a motor acceleration or deceleration below a predetermined maximum motor acceleration or declaration. In other cases, the normal operating condition includes a weight on the horizontal structure being below a predetermined maximum weight. In some instances, the motor is adapted to backdrive when the normal force applied to the horizontal structure exceeds the sufficient normal force, such that the horizontal structure translates vertically without the furniture item pivoting about the pivot point. The horizontal structure can be a bed. According to the invention, the furniture item includes a counterweight disposed adjacent to the vertical wall structure. The furniture item may also include a couch, a bedside table, and/or a desk disposed adjacent to the vertical structure and beneath the horizontal structure. In some cases, the pivot point is located at a point on the coach and/or the bedside table furthest from the vertical structure. Corresponding methods of operation for this aspect are also described.

According to the invention, a furniture item includes a translating element adapted to be translated by a drive component; and at least one support structure attached to the translating element and adapted to at least one of: (i) automatically extend upon translation of the translating element in a first direction and (ii) automatically retract upon translation of the translating element in a second direction.

According to the invention, the translating element includes a horizontal structure adapted to translate vertically. In some cases, the horizontal structure includes a bed. The drive component is a motor. In some instances, the furniture item also includes a sensor adapted to sense an amount of toque on the primary motor. The primary motor can be adapted to stop translating the translating element when the torque sensed by the sensor exceeds a predetermined threshold. In some cases, the support structure is a leg of the translating element. The at least one support structure can be two support structures.

In certain implementations, the furniture item can also feature a secondary motor connected to the at least one support structure, where the secondary motor is adapted to extend and retract the at least one support structure. In such implementations, the secondary motor can be configured to begin extending the at least one support structure when the translating element reaches a particular position and finish extending the at least one support structure before the translating element reaches a lowest position. In some instances, the secondary motor is configured to begin retracting the at least one support structure when the translating element reaches a particular position and finish retracting the at least one support structure as or before the translating element reaches a highest position. The furniture item can include a passive detent adapted to lock the at least one support structure in a retracted position without consuming power. The furniture item may include a passive mechanism (e.g., a push rod, a cable, and/or a rack and pinion) connected to the at least one support structure, where the passive mechanism is adapted to extend and retract the at least one support structure. According to the invention, upon loss of power to the drive component, the at least one support structure is adapted to automatically extend to an extended position Corresponding methods of operation for this aspect are also described.

In general, in another aspect, embodiments of the invention feature a furniture item that includes a translating element; a cable and pulley system attached to the translating element; and a motor adapted to drive the cable and pulley system to translate the translating element, where the motor and the cable and pulley system are configured such that when a weight on the translating element exceeds a threshold value, a fail condition occurs.

In various embodiments, the translating element includes a bed. The translating element can be adapted to translate vertically between a floor and a ceiling. In some instances, the threshold weight is the average weight of a child. In some cases, the fail condition included the cable slipping on the pulley. In other cases, the fail condition includes the motor stalling. The furniture item can also include a counterweight attached to the cable and pulley system. Corresponding methods of operation for this aspect are also described.

In general, in another aspect, embodiments of the invention feature a furniture item that includes a translating element; and a controller operatively connected to the translating element and adapted to control movement of the translating element, wherein the controller is adapted to be operated (i) via a physical interface and a wireless interface and (ii) in a plurality of modes.

According to the invention, a furniture item adapted to translate vertically. The furniture item can include a bed. The plurality of modes can include a local mode in which the controller cannot be operated by the wireless interface. The plurality of modes can include a visual mode in which the controller can only be operated by the physical interface. The plurality of modes can include a sleep mode in which the controller cannot be operated by either the physical interface or the wireless interface for a predetermined period of time or until a user changes the controller to a different mode. In some instances, when the controller is in sleep mode certain functionalities of the furniture item remain enabled (e.g., AC power remains enabled such that the lights on the furniture item are operable). In some instances, the controller is further adapted to communicate with an RFID device external to the furniture item. The RFID device can be worn by a human and/or an animal. Corresponding methods of operation for this aspect are also described.

In general, in another aspect, embodiments of the invention feature a furniture item that includes a primary element comprising a first height, a first width, and a first center of gravity; and a secondary element comprising a second height lower than first height and a second width wider than the first width, wherein the primary element is attached to the secondary element such that a center of gravity of the furniture item is lower than the first center of gravity.

In various embodiments, the primary element includes a translating element (e.g., a bed). In some instances, the secondary element includes a track that guides movement of the translating element. The center of gravity can be at a height such that the furniture item does not tip over under forces generated by movement of the translating element.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention. In the following description, various embodiments of the present invention are described with reference to the following drawings, in which:
FIG. 1 is a schematic side view of a moveable furniture item depicting an example pivot point and center of mass, according to various embodiments;
FIG. 2 is a schematic illustration of an example extension of a leg of a furniture item, according to various embodiments;
FIG. 3 is a schematic perspective view of a furniture item having a particular configuration, according to various embodiments;
FIG. 4 is a schematic perspective view of an example furniture item configuration in which a bed is in a lowered position, according to various embodiments;
FIG. 5 is a schematic perspective view of the example furniture item of FIG. 4 in which the bed is in a raised position, according to various embodiments;
FIG. 6 is a photograph of an example actuator switch, according to various embodiments;
FIG. 7 is another photograph of an example actuator switch, according to various embodiments;
FIG. 8 is a schematic illustration of a time-of-flight sensor, not according to the present invention;
FIG. 9 is a schematic depiction of a furniture item configured to operate in a standard mode, not according to the present invention;
FIG. 10 is a schematic depiction of a furniture item configured to operate in a local mode, not according to the present invention;
FIG. 11 is a schematic depiction of a furniture item configured to operate in a baby mode, not according to the present invention;
FIG. 12 is a schematic depiction of a furniture item configured to operate in a hibernation mode, not according to the present invention;
FIG. 13 is a flowchart depicting an example service management technique, according to various embodiments;
FIG. 14 is a flowchart depicting an example uniform translation technique, according to various embodiments;
FIG. 15 is a photograph of UL962 which provides certain safety standards for household furnishings;
FIGS. 16A-B are illustrations of the torque effects of attaching a moveable furniture item to a longer guidance track, according to various embodiments;
FIGS. 17A-B are additional illustrations of the torque effects of attaching a moveable furniture item to a longer guidance track, according to various embodiments;
FIG. 18 is an example computing device that can be used in various embodiments;

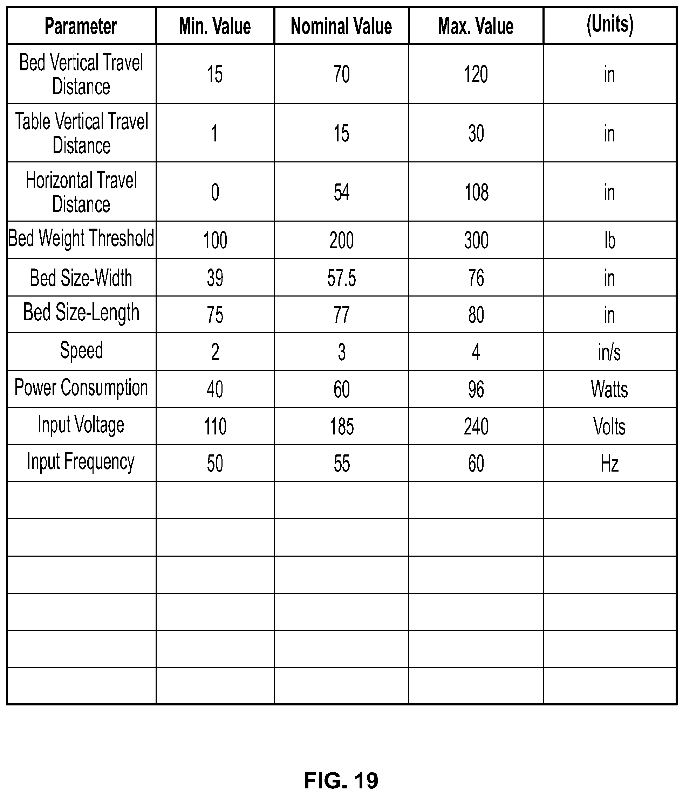

FIG. 19 is a chart listing example values for various parameters related to a moveable furniture item, according to various embodiments; and
FIGS. 20A-B are schematic perspective views of a furniture item including a bed and a desk, according to various embodiments.

### DETAILED DESCRIPTION

This disclosure describes an improved moveable furniture system and techniques for operating the system by incorporating features that solve many of the problems in existing moveable furniture items. The improved features are implemented throughout various elements of the system, including hardware elements, controller elements, and/or software elements. Although this description will often refer to movable furniture elements and, in particular, a drop-down bed furniture item, it will be understood that the concepts described herein can be applied to any moveable element, e.g., non-bed furniture items, as well as non-furniture items such as garage doors, factory equipment, pallet delivery, vehicle systems, among many other examples.

The various inventive features are described in more detail under separate headings below. However, the headings are provided simply for reader convenience and do not limit the disclosure in any way.

### Freestanding Cantilevered Dropdown Bed

Various embodiments of this disclosure relate to an improved moveable furniture item for maximizing the utility of a bedroom; in particular, a robotic furniture unit that elevates a bed vertically to the ceiling. In some instances, when the bed is in its retracted position, it reveals an integrated sofa or table below which allows the transformed bedroom to instantly function as a living room, dining room or home office. Although this description will relate primarily to a bed, it will be understood that similar concepts can be applied to other vertically translatable items, e.g., end tables, book shelves, kitchen tables, and non-furniture items.

Current retractable bed solutions such as Murphy beds can require expensive structural retrofits to the building or, at the very least, multiple secure attachment points to existing structural beams in the walls and/or ceiling. Conversely, in some instances, the inventive robotic furniture unit described herein cantilevers the bed off of the wall/ceiling and is still balanced such that it can be freestanding. This allows it to be easily retrofit into any room requiring only drywall anchors for additional safety.

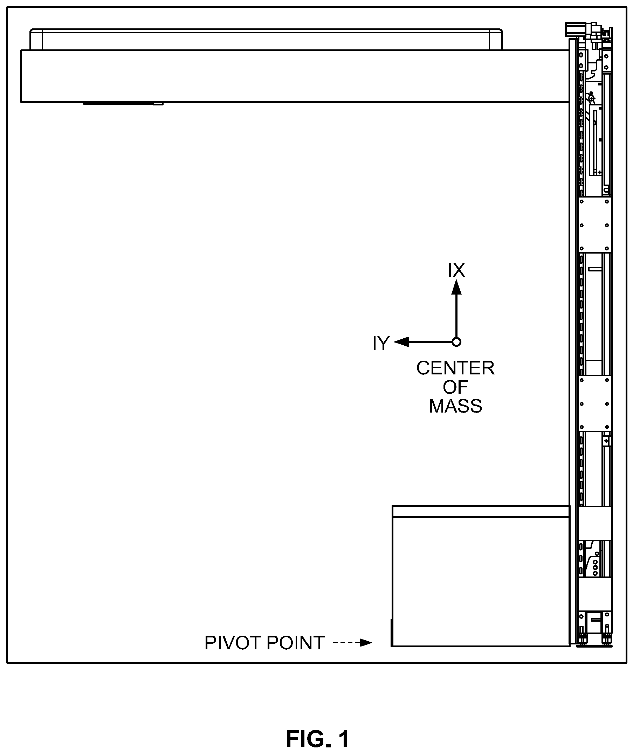

In some embodiments, bedside tables are included in the furniture unit. Such bedside tables can stay on the floor when the bed is raised and function as either arms for the sofa or small side tables/seating when the bed is retracted. The bedside tables can be an integrated structural part of the furniture unit (e.g., couch). Because they are rigidly connected to the furniture frame, in some configurations, the end of the bedside tables furthest from the walls is the pivot point around which the furniture unit would tip (see FIG. 1). By concentrating the heaviest parts of the system, including the counterweight, adjacent to the wall as far as possible from the pivot point, and by keeping the cantilevered bed structure as light as possible, the furniture unit's center of gravity is safely between the pivot point and the wall allowing it to be statically freestanding.

In such instances, the center of gravity is sufficiently behind the pivot point such that the furniture structure will not tip due to any normal dynamic forces. The motor max speed and acceleration can be limited such that it cannot generate enough momentum to cause the furniture to tip. In some instances, the motor(s) that move the bed are backdriveable such that if a force were to pull the bed downwards (e.g., someone reaching up and pulling on the bed), the motor would backdrive and the bed will slide down its track rather than tip the entire structure.

### Cantilevered Dropdown Bed - Automatic Leg Extension/Retraction

Retractable beds currently on the market require multiple steps such as making the bed, attaching straps, manually moving the bed and manually swinging support legs. In various embodiments, the improved furniture item described herein lessens the user's cognitive load by making the complete transformation possible with a single button or voice command. In such embodiments, the bed legs automatically extend when the cantilevered bed lowers and automatically retract when the bed raises. This is accomplished either via active motor control or by a passive mechanism.

**In** the case of active control, in some instances, a dedicated motor directly drives the extension of the bed legs. The controls of the leg motor can be tied to the position of the bed. When lowering the bed, the legs start to extend when the bed reaches a certain height and finish extending as or before the bed reaches its lowest position. When raising the bed, the legs start to retract at a certain height and finish retracting as or before the bed reaches its highest position. In some cases, a passive detent can lock the legs in their retracted position precisely and holds them there with no required power consumption.

**In** some embodiments, the amount of current delivered to the leg motors can be monitored, to allow the system to detect an obstruction or fault. Unexpected force on the legs will generate additional current, which can cause the system to stop movement of both the legs and the bed (e.g., if a particular current threshold is exceeded). The current threshold can be adjustable / tunable to achieve performance and/or safety objectives.

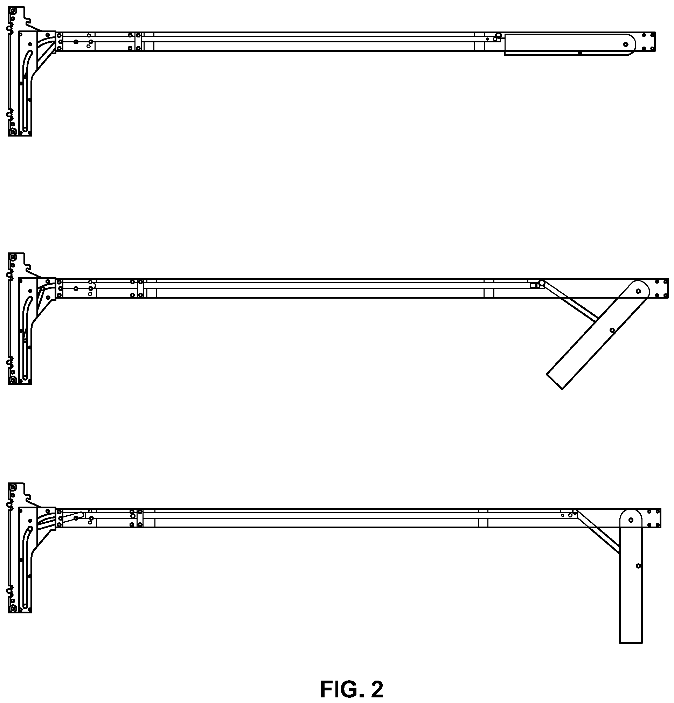

**In** the case of a passive mechanism, the mechanism can have no separate motor for the legs. Instead, as one example, the vertical movement of the bed causes the extension or retraction of the legs via a passive mechanism such as a push rod (see FIG. 2), a cable, or a rack and pinion, as a few non-limiting examples. In such instances, current sensing on the motor lowering the bed (as opposed to the legs) can be used to detect an obstruction or fault.

### Cantilevered Dropdown Bed - Additional Support Structures

**In** various embodiments, the furniture system raises and lowers the bed cantilevered off of a rigid frame against the wall. The cantilevered bed in its fully lowered position is generally strong enough to support a person on the bed without additional support, however, in some embodiments, to provide a more solid feel and a greater sense of security, additional support structures can be used.

Two example types of additional support structures are: support attached to the bed and support external to the bed. Support attached to the bed can be in the form of standard legs. The legs can be at the corners of the bed or somewhere in the middle to be less visible to someone standing beside the bed. Legs can retract on a pivot or telescopically. The legs can also take the form of panels that run the length of the bed side and/or end. These panels could have the added benefit of folding up around the bed in the raised position to contain and conceal loose bedding.

Support external to the bed can be either static or retractable. If static, the support can be integrated into a piece of furniture placed in a consistent location under the bed such as a coffee table. For example, the bed can simply lower onto the support. Retractable support can emerge, as a few examples, from the integrated bedside tables or couch and engage the bed when it is in its lowered position.

### Cantilevered Dropdown Bed - Automatic Table Lowering/Raising in a Horizontal Orientation

Typical retractable tables fold vertically or slide horizontally into a slot when stored. This means that the user needs to clean all objects off the table prior to putting the table in its stored position. In the case of a workspace desk, this can represent a significant cognitive load as well as a physical effort.

In various embodiments, the inventive furniture item described herein gently and automatically lowers the table (or in some instances, a desk) to the floor as the bed lowers maintaining a horizontal orientation so that the table does not need to be cleared before transforming the room. When the bed is raised, the table is automatically raised to a preset height and the user's workspace is restored.

In various embodiments, the table can be counterweighted with an extra load of appropriate amount based on the desired application (e.g., in a range from 10-90 lb, in a range from 20-80 lb, in a range from 30-70 lb, in a range from 40-60 lb, etc.) In some embodiments, movement of the bed up and down can trigger corresponding movement of the table. For example, when the table is in an upper position it can include a spring loaded latch (or other appropriate structure) that engages to add stability. When the bed moves down, it can unlatch the spring to allow the table to move down using the table's own dedicated motor. In some embodiments, the table can include at least one (e.g., two) motorized legs that can deploy to add increased stability to the table. In some cases, the legs are mounted to the table and in other cases the legs are hinged from a structure on the floor.

In general, any known technique can be used to raise and lower the bed (e.g., belt and pulley system, motorized pulley, etc.) In some embodiments, the bed can be raised and/or lowered using two guiding carriages running on two tracks, one on each side of the bed. Each carriage can be connected to a steel cable that wraps around a set of pulleys and is connected at the opposing end to a counterweight. In some instances, both cables are connected to the same counterweight, but in independent locations. In a normal scenario of such instances, both cables keep the bed horizontal and straight because they are the same length. However, if one of the cables breaks (e.g., by accident), the carriage on that side will be free to fall, causing that side of the bed to begin falling, but the cable on other side will keep the counterweight in the same place and keep the other side of the bed engaged. This scheme can prevent the entire bed from falling and can significantly reduce or avoid damage.

**In** some instances, the cantilevered table moves vertically in a horizontal orientation either on a track similar to the bed mechanism or via a 4-bar linkage system, or via another type of translation system. In some cases, a passive restoring force (e.g., a counterweight or a spring system) such that, under typical load, the table's preferred location is in the upright position.

As one example operation of the system, when the bed moves down, it first engages and releases a safety latch on the table carriage which is used to secure the table in the up position. The latch then pivots to firmly attach the table carriage to the bed carriage. The bed then pushes the table down against the passive restoring force. When the bed reaches its lowest position, the table is on the floor with a desired clearance (e.g., approx. 16") above the table up to the bottom of the bed. When the bed is raised, it pulls the desk up with it until the desk carriage hits a stop at the correct height. The latch flips back to its starting position holding the desk in place and releasing the connection with the bed which continues up to the ceiling.

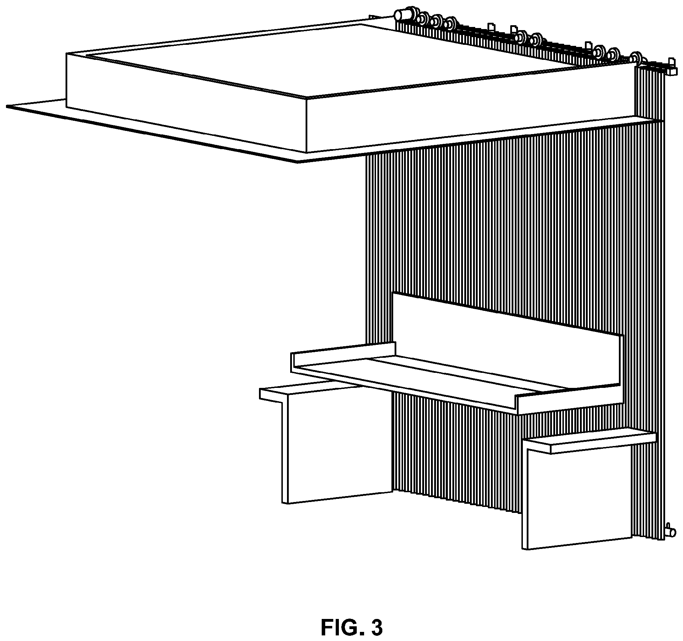

With reference to FIG. 3, for taller items (e.g., a large monitor), the furniture system can be arranged to have vertical clearance up to the ceiling at a particular location (e.g., at the back of a desk, see FIG. 3). As another example, the bed can be cantilevered on two support arms extending out from the wall, such that the arms leave a gap of desired distance (e.g., approx. 10") between the wall and the headboard of the bed. Taller items can be placed in these areas with greater head room.

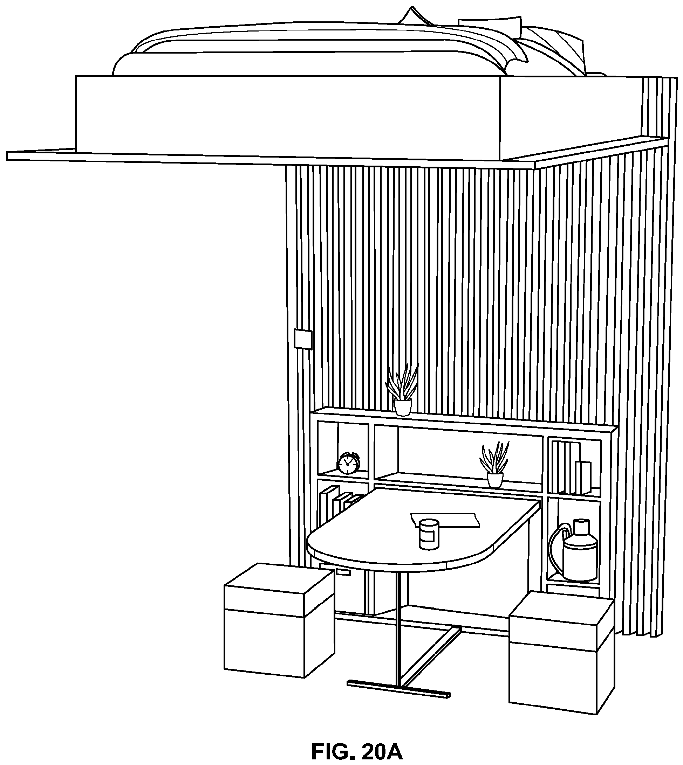

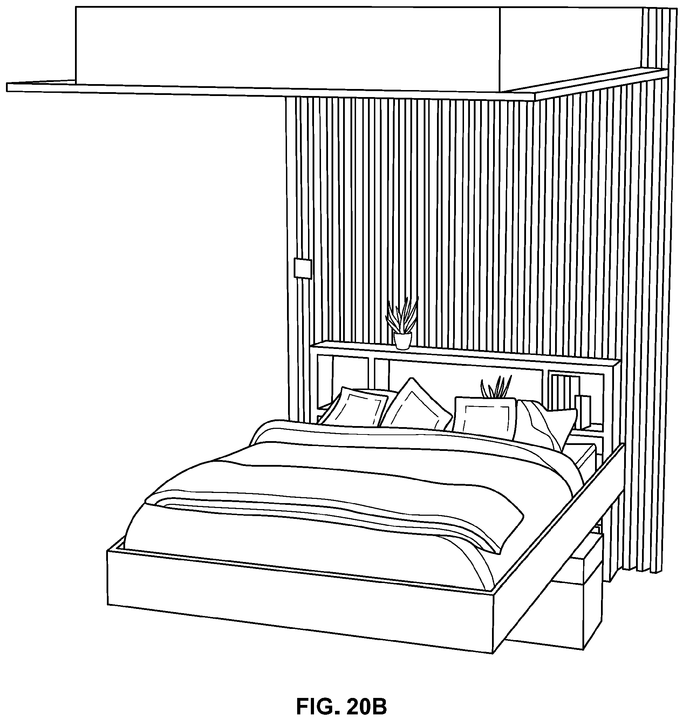

The desk itself can be designed with physical visual cues that show the user the desk headroom clearance. For example, the back panel of the desk can represent the headroom on the main portion of the desk. The rear of the desk with vertical clearance up to the ceiling can be delineated by a small recess in the thickness of the desk surface. FIGS. 20A-B are example illustrations of a furniture item including both a bed and a desk.

### Cantilevered Dropdown Bed - Motorized Pulley for Friction Based Counterweight Movement

Motorized actuators generally require a separate drivetrain such as belts, chains, leadscrews or racks and pinions. In various aspects, the inventive features described herein include a low cost, quiet and efficient method to elevate a furniture item (e.g., a bed) that does not add a separate drivetrain.

As an example, the bed can be attached by wire cables to a counterweight. The counterweight balances the weight of the bed so that the motor torque required to move the bed is relatively low compared to the full weight of the bed. Using a cable on either bed arm attached to a single counterweight at a common point ensures that the bed will not skew. Rather than add a separate, dedicated drive mechanism, torque can be applied directly to one of the counterweight pulleys. Driving just one pulley can be enough to move the entire system. The tension of the cable around 180 degrees of one of the pulleys provides enough friction to avoid slippage between the cable and pulley. This results in a quiet and efficient operation of the motorized pulley.

### Cantilevered Dropdown Bed - Passive Safety Features

Raising furniture above the heads of people present certain safety risks. In various aspects, the inventive features described herein include multiple passive backup strategies to prevent the furniture item from suddenly dropping in the case of a catastrophic control or mechanical failure.

**In** various embodiments, the arms holding the furniture item (bed) are attached by two wire cables to a central counterweight. The counterweight balances the weight of the bed so that the motor torque required to move the bed is relatively low compared to the full weight of the bed. In the event of a catastrophic failure, stopping or slowing the movement of the cables, and thus the bed, can be achieved using various passive mechanisms.

As one example, a centrifugal brake can be used. As an example, there are spring loaded stops imbedded into the counterweight pulleys. The pulley suddenly spinning at high speed quickly forces the stops radially outward. Once they are extended past a certain diameter, they engage with a rigid housing and instantly stop the pulley rotation.

As another example, an air cylinder can be used. For example, the counterweight can be housed in an air-tight channel. The counterweight is attached to a plunger that completely fills the cross section of the channel except for some relatively small openings which allow air to pass through. If the counterweight moves slowly, the air moves through the small openings smoothly and the plunger does not impede the bed movement. If the counterweight moves suddenly, the air cannot be forced through the opening fast enough to allow freefall. A cushion of air slows the bed allowing time for the user to react.

As another example, a tilt jamming approach can be used. For example, the counterweight is a wide rectangular box. In normal operation, the weight is level and fits with tight side clearance in its vertical channel. If one cable were to break, or some other external force made one side come down faster than another, the wide rectangular counterweight would tilt and jam in its channel stopping the descent of the bed.

### Cantilevered Dropdown Bed - Cantilevered Fixed Shroud With Responsive Lighting Elements

Having a bed raised overhead can appear, to some people, to be untidy and possibly disconcerting from a safety perception standpoint. In various aspects, the inventive features described herein include a static portion of the furniture unit that addresses these possible concerns and also offers a platform on which to optionally add intelligent, situationally responsive lighting.

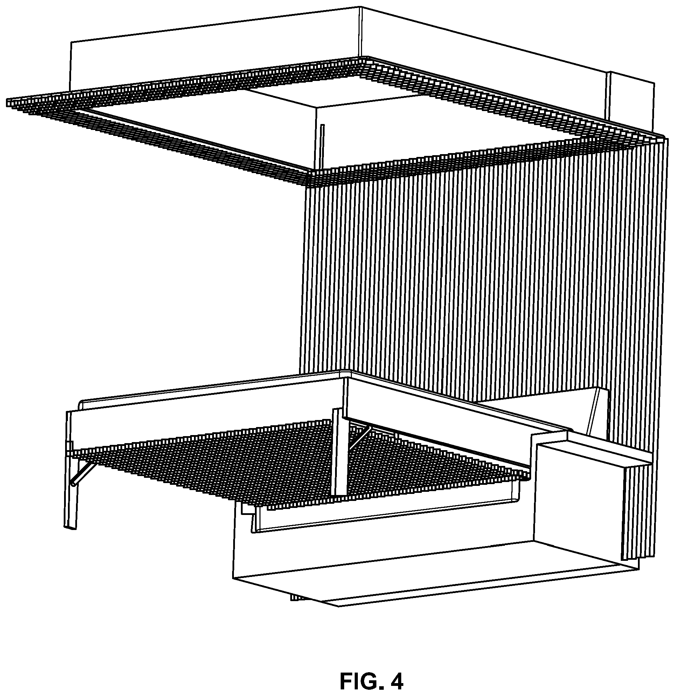

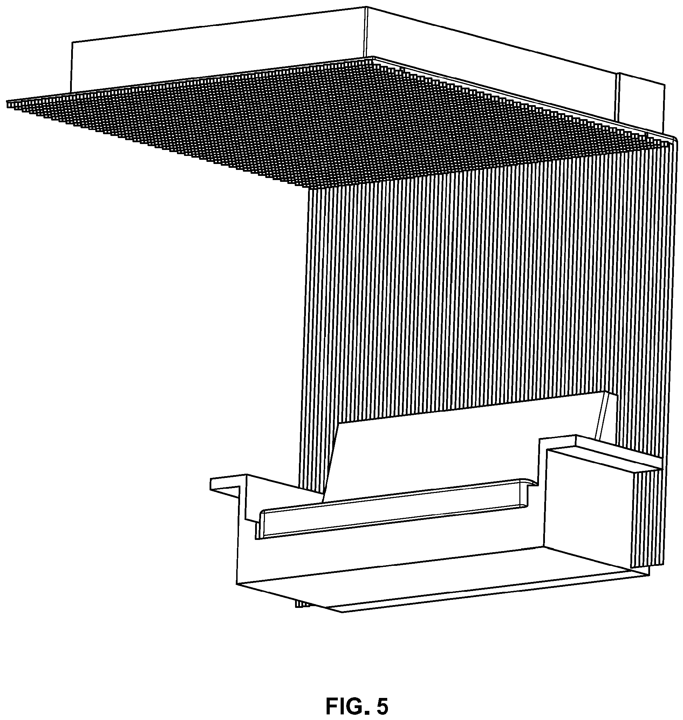

In various embodiments, the system can include a fixed bed shroud is cantilevered off the wall above the elevating bed (compare FIG. 4 and FIG. 5). When the bed is raised into the shroud, the bed appears to be an integrated part of the shroud. The user's perception safety is increased due to bed visually entering into a "docking" station. All of the bedding is hidden and the bed itself seems to have disappeared.

In some embodiments, the bed shroud offers a convenient platform on which to install downward area and task lighting fixtures. The ceiling facing surfaces can have indirect lighting elements. The LED lighting can be varied by the user to enhance mood. For example, it can be integrated with other media elements to compliment video displays or synchronize with music. The lights can be used to help the user wake up and to fall asleep. The lights can be used to alert the user of doorbell rings, phone calls, text messages, and/or social media notifications.

### Positioning Localization Systems

In most electromechanical systems, motion and position control is included for the proper functioning of the system. There are two common variations of control: open-loop control and closed-loop control.

Open-loop control involves using no feedback to determine a system's or any of its moving elements' position(s). Instead, the positions are not used by the control system or are guessed via other variables. Other variables can include the number of steps commanded like in the case of a stepper motor and the amount of time certain voltages are applied to a DC motor. The biggest problems with open-loop control is that the position estimation may not be accurate enough for proper operation of the system, and the error in the estimation tends to increase with time of operation/movement, referred to as drift. Therefore, while open-loop control is the simpler and less expensive of the two options, it is typically only appropriate in electromechanical systems where positioning is not important, where running into mechanical stops is acceptable or otherwise the mode of operation by design, where humans close the loop and are needed to operate the system, or where drift and errors in position estimation can be tolerated and handled, and similar circumstances.

Closed-loop control involves using feedback to determine a system's or any of its moving elements' position(s). This is usually done via one or more sensors integrated into the system. The sensing can be as simple as a single switch or sensor that allows the system to "home" or know whether or not it is at a single position (and therefore be able to work off of that information as a reference point, as well as clear it's accumulated error in estimation). Another common motor and sensor combination is the encoder. An encoder is a device that attaches to a motor and is able to measure and signal to the controller the amount of rotation of the shaft.

Another family of sensors useful for positioning are called depth sensors. Depth sensors can determine the distance from the sensor to the closest object along a particular line or cone. The most common depth sensors use sound (e.g., ultrasound) or light (e.g., infrared). The sensor sends out a pulse of light or sound and then senses the reflected/bounced back light or sound. Based on properties such as delay for signal to travel back ("time-of-flight"), intensity/amplitude of signal, and/or frequency of signal, the sensor is able to determine the distance to the nearest object in the path of the signal.

There are two commonly-used types of positioning: relative and absolute. Relative positioning is the system or element of the system knowing its positioning relative to another point or something else internal to the same system. Absolute positioning is the system or element of the system knowing its position relative to another point or something else external to the system (its environment).

In the context of robotic furniture, each transformable element's knowledge of its position in relation to the other transformable elements in the same system (relative) and knowledge of its position in relation to walls, furniture, and other objects in its environment (absolute) are important for the system's safe and reliable operation. A combination of sensors on the elements, along with the appropriate control software, can achieve this knowledge.

One inventive feature described herein includes precise positioning and motion control systems integrated into a robotic furniture system. Non-limiting examples of the configuration and operation of such systems are described below.

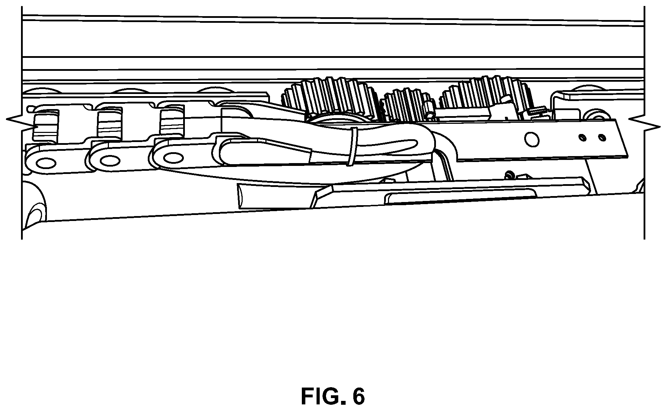

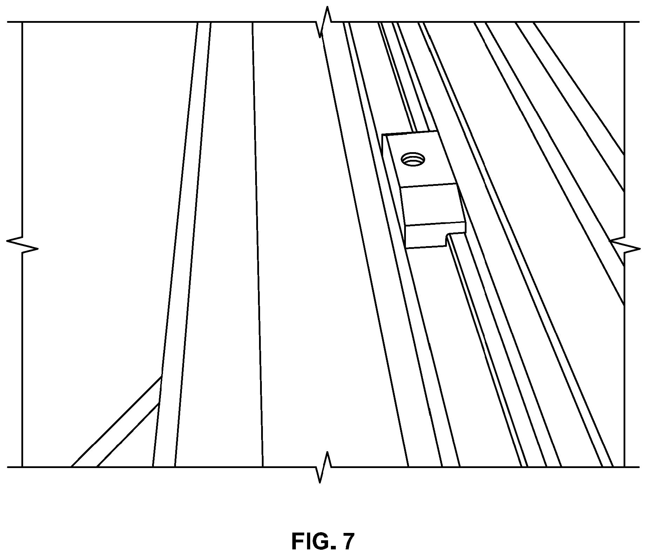

For actuator-based systems, closed-loop positioning can be achieved by a single switch located in the center of the actuator (see FIGS. 6 and 7). A stepper motor can drive the system along the actuator. Positioning of the system can be estimated via the number of steps commanded by the stepper motor. When the system crosses the center of the actuator, the switch is pressed, which sends a signal to the controller, and a precise position of the system can be established at that instant. While this may appear as a simple and coarse-grained absolute positioning technique, and that the system is still subject to errors and drift when the system travels away from the center, in reality the positioning remains precise due to special controls that stop the motor before it is able to lose or skip steps, while other sources of error remain vanishingly small. In various embodiments, the switch can be replaced or augmented with other sensors and methods to allow for more continuous or fine-grained absolute positioning.

This positioning can allow the system to achieve various advantages. For example, limits of travel can be set, such that the system cannot travel past those limits. In this way, the system can avoid traveling into a wall, other furniture, and the ends of the actuator. As another example, precise positioning allows the system to use mapping to detect obstructions by objects, people, or animals and stop, as described in International Patent Application No. PCT/US2018/038742. As another example, relative positioning of certain furniture items (e.g., the bed system described elsewhere herein) allows the system to move autonomously correctly and predictably by knowing when the item is fully retracted (sometimes referred to herein as "fully in"), fully deployed (sometimes referred to herein as "fully out"), or somewhere in the middle and, therefore, when the item should be moved in before moving to a preset position, as well as ensuring that the item does not exceed the travel limits of the system, as described previously.

In various embodiments of the actuator-based system described herein, the furniture item (e.g., bed) moves in and out via friction drives (e.g., two motors with wheels pressed into the side the bed). The motors can be programmed to rotate over the length of the bed. In some instances, when the bed runs into the end all the way in or out, it forces the motors to stall and stop, and the system can infer the bed has reached an end. This is essentially open-loop control and works well when many conditions are met; such conditions include but are not limited to: limited, if any, slip and drift between the friction drive wheels and the furniture item, no electrical failures, no obstructions to the furniture item's motion (e.g., oversize pillows, comforters, people, or other objects), no stopping of the furniture item via the interface controller (wired) or a wireless command, and no pushing of the furniture item in or out while the bed is not in motion. Otherwise, the position estimation becomes corrupted, which can lead to improper operation of the system, including but not limited to the system trying to move the furniture item out when it is already out, the system trying to move the furniture item in when it is in, the system failing to move the furniture item in when an autonomous movement is commanded, and the system failing to keep the furniture item within its limits of travel.

To avoid and solve some of the problems described above, in various embodiments, the furniture item can be configured and operated using a control algorithm. An example operation of the control algorithm follows. On the furniture item's initial movement after power up, per user setup instructions, the system infers that the furniture item has stopped in a fully retracted position. With every subsequent movement, the system keeps track of the number of steps the item moved before it is stopped. With some amount of tolerance and flexibility, the system can estimate the furniture item's position on every movement and keep errors to a minimum. Use of this control algorithm can significantly improve operation of the furniture item, so long as the furniture item does not slip and is not pushed in or out while it is not in motion.

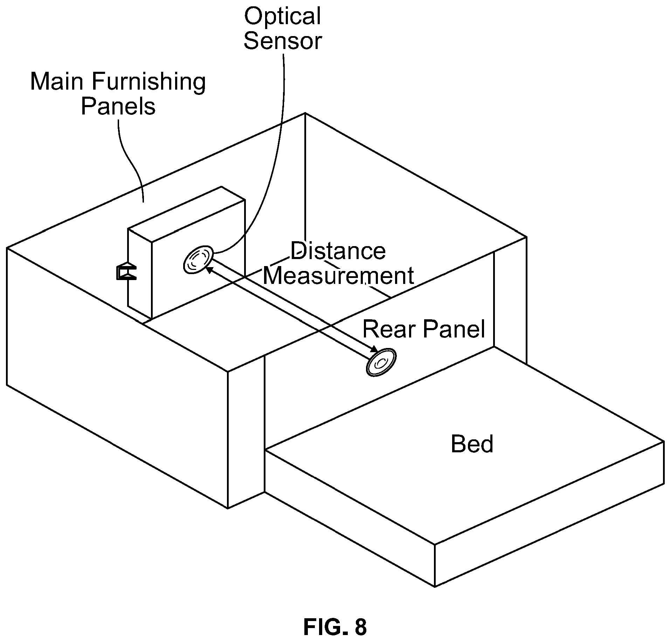

**In** order to make operation even more robust and eliminate additional ways that can negatively affect operation of a furniture item, a sensor can be added to close the loop. For example, the sensor can be of the type that reliably provides position data continuously as opposed to in one or a few points. One example of such a sensor is a time-of- flight sensor. A time-of-flight sensor emits a beam of light (either linear or conical). The light bounces off the object in its path. The sensor measures the time it took for the light to travel round trip and can therefore infer distance to the object. One such time-of-flight sensor is the VL53L1X sensor by STMicroelectronics, but many sensors can be used, of varying range, resolution, footprint, and price (see FIG. 8).

In various embodiments, the time-of-flight sensor is integrated into an electronics board that is mounted in the panel on which the furniture item closes when all the way in and points towards the a particular location on the furniture item (e.g., a bed's back panel). The sensor can measure the distance to the furniture item in millimeters. As one example, when the furniture item is fully in, it measures 0 mm or close to 0 mm. When the furniture item is fully out, it will read out that length, which depends of the size of the item (and, in some cases, its container). The sensor can also measure the distance to the furniture item anywhere in between. That way, the system does not guess the position of the furniture item but can instead read the sensor and get the precise position. Drift and users pushing or pulling the furniture item do not influence the system's operation.

Having such precise and reliable operation can allow for improved operation of moveable robotic furniture items. For example, rather than using hard stops that the furniture item runs into when it reaches the ends, the furniture item can slow down and stop right before it reaches the stop, which puts less mechanical strain on the furniture and chassis and which avoids the sound of the collision. As another example, if the motor shaft is spinning but the position of the furniture item does not change, this can indicate a mechanical or electrical problem and can aid in the diagnosis and repair of a system, along with preemptive and preventive actions. In some instances this can prevent a service call; for example, if the motor wires are flipped or the stepper drivers are misconfigured, the furniture item could travel in the opposite direction as commanded. In the open-loop case, the system would be unable to determine anything is wrong. In the closed-loop case, the system could invert the direction of travel in software, quickly and autonomously fixing the problem.

Such localization of furniture and its elements can extend beyond each system internally. With Internet of Things ("IoT") systems connected, either wired or wirelessly, they can share their position with each other both to avoid collisions but also to affect a room's configuration and use in synchronicity. For example, a robotic divider/closet system and a robotic drop-down bed system in the same room can share their location with each other, such that they can move appropriately with respect to each other. For example, when a user activates a bedroom mode/scene, the divider/closet can move up against the wall and out from under the bed. When the divider/closet reaches the destination, the bed can safely proceed to move down. As another example, when the user activates a walk-in closet scene, the bed can move up into the ceiling. Once the bed stops moving, the divider/closet can proceed to move out and under the bed to create the walk-in closet.

### Programmed Safety Modes

Different situations and moments may require different ways of interacting with moveable robotic systems. For example, being alone at home, having babies around, having small pets around, and hosting a party with tens of people, all present different situations that may require different interaction with the systems. Sometimes the user may want to keep a closer control over how the movement is activated, or even completely freeze the state of the system so that nobody can move the piece of furniture. In other instances, the user may be comfortable with less control over the system. The ability to have different modes at different times, and the ability to switch between them easily, can present significant advantages to users.

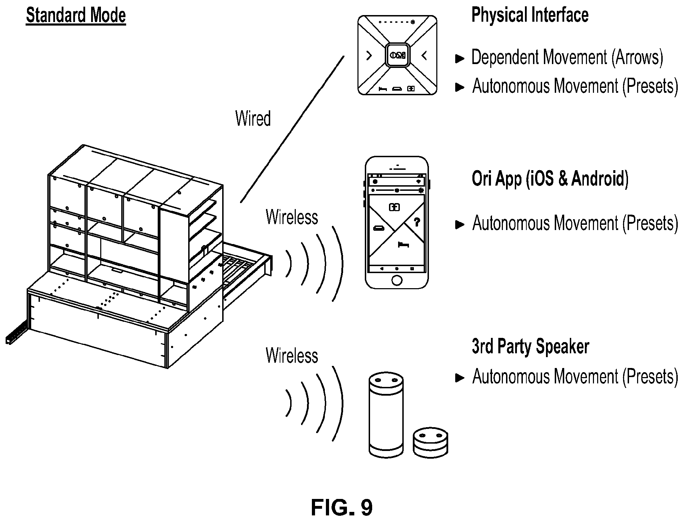

In various embodiments, the systems described herein can have a standard mode (see FIG. 9) that features three ways that the user can use to interact with it. The first way is to control the position of the movable systems by using a physical interface attached to the furniture piece. The second way is using a mobile app. (e.g., iOS or Android), which sends commands over Wifi to a microcontroller to move the system. The third way is using a third party device, e.g., Amazon's AlexaTM or Google HomeTM, as an interface to send voice commands.

In various embodiments, movement of the system can occur in two ways: dependent movement and autonomous movement. Dependent movement can be accomplished using the physical interface by pressing and holding the arrows to initiate the movement of the system. The furniture will move as long as the user is pressing the arrows and it will stop when the finger is released. Conversely, autonomous movement uses predefined positions that the system can go to after receiving a command from the physical interface, an app, or a third-party device. These positions can be set by users in advance in their favorite configurations, and can be remembered by the system to make the transition from one to the other easier since they do not require that the user be physically present while the system is moving.

In some circumstances, it can be advantageous to restrict or modify some of the commands, movements, or usable interfaces. In general, any restrictions or modifications can be made. Three example restrictions/modifications are described below, but other modes are possible and contemplated. Any of the modes can be enabled or disabled using an app. or, alternatively, by entering a specific button combination in the physical interface.

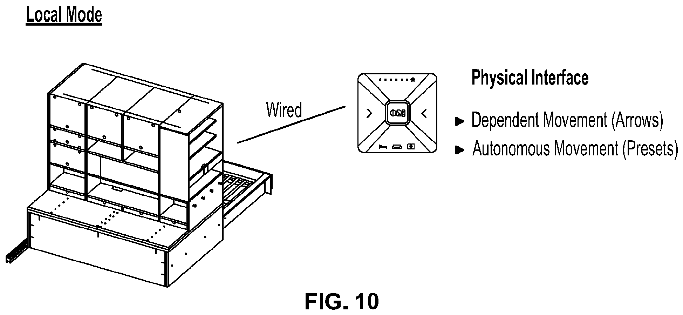

A first example mode is local mode (see FIG. 10). Local mode disables any wireless connectivity and only allows commands entered through the interface. In this mode, the user is able to use the physical interface in its full capacity in order to, e.g., control the lights, move the system using the arrows (dependent movement) or use the presets (autonomous movement), but any commands sent wirelessly (app or voice control) will be capped or ignored. This mode may require a physical presence to activate the movement, so it can be advantageous for applications where the user does not want to be part of the IoT environment or wants to have the control system centralized in a single place. One example is an AirbnbTM owner that enables local mode to avoid having the user take over the ownership of the system through the app. Another example is a user that is skeptical about his local wireless network and is afraid of being hacked, so he does not want to have a system that can be controlled over the internet.

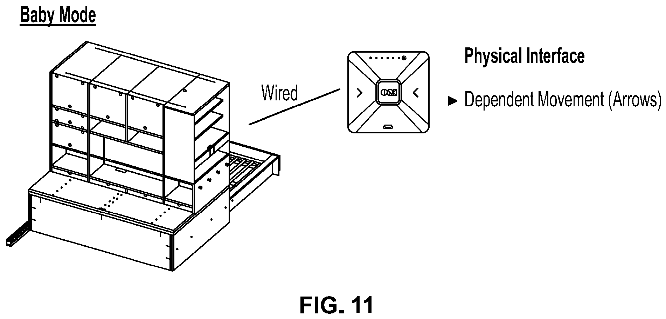

Another example mode is visual mode (in some instances referred to as "baby mode," see FIG. 11). Visual mode disables the ability to activate any autonomous movement. Therefore, the only way to move the system is using "dependent movement" by pressing the arrows on the interface. Visual mode can be considered a local mode with the presets capped. Visual mode puts system movement in full control of the user, since the system will only respond to the user's physical commands as long as the user's finger is pressing one of the arrows, or the lights. This mode enables users to look into the space where they intend to move the system to ensure that no person, animal, or object is trapped. Visual mode can be enabled to avoid autonomous and unobserved movement, and to keep full control of the movement of the system. One advantage of only using dependent movement on the physical interface is that in case of an undesirable event, the system will stop as soon as the user stops pressing the interface, which minimizes the risk of unintended system interaction.

In some instances, the interface can be installed at a height such that only an adult user would be able to reach the interface and move the system (e.g., 55" inches from the ground). So, in this mode, a child would be unable to activate the movement of the system, even if the child had access to other methods of remote activation, such as via an app or voice control.

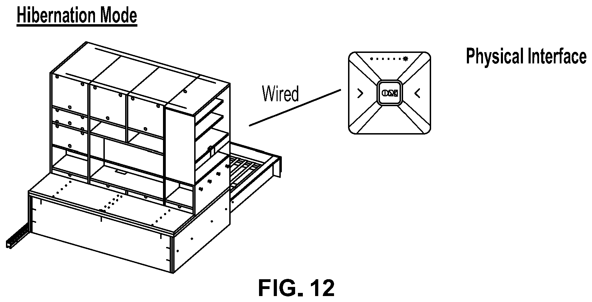

Another example mode is sleep mode (in some instances referred to as "hibernation mode," see FIG. 12). Sleep mode disables the ability to interact with a system over a certain period of time. Sleep mode deactivates the system, so that it will not respond to any commands, no matter the form of command or source of activation. Sleep mode also sets the current of the main motor to the value of Irun, locking the motors, so that it cannot be pushed or pulled manually and it becomes difficult to move the system. In some instances, the icons on the interface (arrows and presets) will be dimmed and/or unusable at this stage.

In some instances, sleep mode can be different from completely unplugging the system because, under sleep mode, the AC power can still be activated, so the outlets on the system are still functional and/or the light controls can still be activated. Sleep mode can be advantageous, e.g., for a user who is hosting guests but does not want a guest to be able to control the system.

### Contactless Safety Elements

Another inventive feature described herein includes sensor elements that provide advantageous safety, performance, and cost parameters over conventional elements. Many existing sensors used in moveable furniture solutions have shortfalls for the applications described herein. In some implementations, a desirable sensor is able to understand the entire environment within which a furniture item moves, or, in some cases, can scan a large 2D plane directly in front of the moving furnishing in order to understand if an unknown object is present at any elevation to avoid a collision. Conventional sensors offer detection of objects within a 2D line, e.g., garage door break beam sensors or 3D cones, e.g., back up parking sensors. In order for such conventional sensors to work in the environments/systems described herein, there would need to be a large array of multiple sensors that would be bulky and cost prohibitive. Various aspects of the inventive features described herein include solutions to this problem, described below.

The first example solution includes using 3D Area Mapping approach. 3D Area Mapping uses 3D Time of Flight (3DToF) sensors to establish a virtual map of a residential or commercial space. 3DToF sensors operate by taking a picture of the environment and assigning a depth to each pixel of the frame. This technology may be used in a novel application along with proprietary algorithms that parse the depth data in order to sort objects into two categories: known objects and unknown objects. Detecting unknown objects in a reliable manner across a large area of space offers an advantage of increasing the safety of robotic furnishings that may be prompted to move in the absence of human presence.

The proprietary algorithm takes into account the size, shape, travel, and/or speed of the associated robotic furniture. Such parameters can be manually input by an installer or user or, in some cases, learned during an initial phase where the system is moved with no external objects present. After the parameters are obtained the algorithm can compare the data provided by the 3DToF sensors and understand if the depth data is what is expected. If any anomalies are present in the data, the system can be prompted to stop prior to hitting objects that are within the view of the 3DToF sensors.

The second example solutions includes using a 2D curtain approach. Many elevators currently use an array of break beam sensors along the edge of the elevator door to detect objects while closing. While this offers the safety coverage desired by integrating large sensor arrays to detect the space in front of dynamic furnishings, it also creates an undesired industrial aesthetic. The 2D curtain approach described herein provides the same 2D planar or "curtain" coverage with a compact design. In some instances, this approach involves using a small circular device containing an array of optical or acoustic distance sensors, each with a cone of coverage. The number of sensors depends on the detection angle of each individual sensor, but in total the device can cover a 90, 180, or 360 degree field of view depending on its mounting location. As a few examples, if the device is installed in the top corner of a moving element or static structure (e.g., a wall) it may cover 90 degrees; if the device is installed in the top center of a moving element or static structure it may cover 180 degrees; and if the device is installed in the center of the moving element or static structure it may cover 360 degrees.

In various embodiments, RFID tags can be used to locate particular objects in a room. In general, an RFID tag can be used to locate any object; a few examples using pets or babies / children. This may be accomplished by having an RFID tag on a pet collar or a bracelet or garment with and embedded RFID tag. The moving furniture item can use a series of RFID readers around its perimeter in order to establish a virtual safety area around itself. If one of the tags is present, the furniture item can revert to a safe state and not allow movement in the direction of the detected tag.

### Service Management and Preventative/Proactive Maintenance

Most electromechanical systems require maintenance and repair from time to time. Manufacturers and system servicers have entire methods and procedures on how to diagnose problems with their systems, how to solve/repair those problems, how to source, stock, and ship the parts needed for that, how to take and process service calls, and how to preempt or provide maintenance to avoid breakdowns.

Until very recently, service events were often lengthy, complex, and expensive. In many cases, a user would have to determine that a system needed repair, investigate who to contact and how, set up a time for a technician to come diagnose the system (or ship the system to a service center), and if the technician didn't have the parts necessary to perform the fix, wait for the replacements parts to arrive, then perform the fix. In the era of IoT, service events can be better managed to be faster, simpler, and less expensive. A IoT system can diagnose itself, or at least narrow down where the problem is, and send a report to a service provider. A human or program could analyze the report and determine the nature and severity of the problem, what parts may be needed for the repair, and if the system can continue to operate. If appropriate, the service provider can source and/or ship parts to a nearby warehouse or servicing center and reach out to the system owner to inform them of the issue and attempt to schedule a technician visit or request the system be shipped to a service center. A technician, already informed of the problem, can proceed directly to the repair. This can improve a company's bottom line, reputation, and customer satisfaction as well as have manufacturing and supply chain ramifications and inform, with data, the development of future, more resilient and reliable products.

In some embodiments, the moveable furniture items described herein are complex and have multiple elements, including multiple motors and wheels, electronics, and sensors. Each element can have multiple failure modes, each ranging in severity and nature. The problems can be mechanical or electrical in nature or can even result from a previously undiscovered bug, requiring an over-the-air firmware update.

Through firmware and sensors, the movable furniture systems described herein, can have significant capabilities to self-diagnose and report a problem. The following are examples. The systems can detect if the homing switch is disconnected, wired improperly, or otherwise malfunctioning; which can be important if the switch is needed for absolute positioning. The systems can detect if there is a mechanical obstruction preventing the system or one of its elements from moving. The systems can also detect various problems with the motors, such as overheating, short circuits, and open circuits. The systems can also detect electrical problems like undervoltage.

When a system detects such events, a message can be generated and sent to the service provider's servers if the system is connected to the Internet. The message can be stored in a database, and an email can be sent to a support engineer. The engineer analyzes the message, along with usage statistics and patterns of the system, and can get the process of a service event started. The engineer can describe the problem to a supply chain agent, which can go about sourcing and shipping any necessary components. The engineer can also reach out to the building management or system user/tenant. Upon successful communication a technician can be scheduled to arrive and repair the system.

In various embodiments, the diagnosis and repair processes are dynamic and methods can be refined or added. For example, the message and usage statistics and patterns of the systems can be analyzed by a program to make a recommendation without the need for a support engineer. When the program is unable to successfully make a recommendation, it can pass it off to a support engineer. The program can also learn (e.g., via machine learning) what recommendation it should make in the future based on the engineer's recommendation. Similarly, the program can source/ship the parts automatically, and emails can be sent to the user/tenant to try to schedule a technician, or a service software can be provided to building management to streamline the process and provide proactive maintenance.

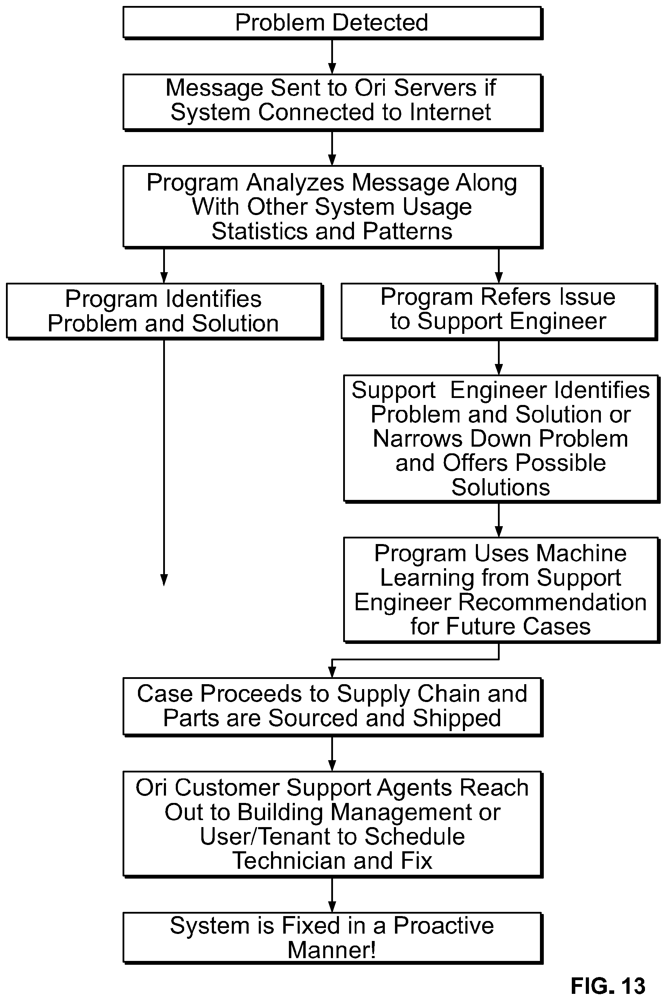

In some embodiments, in the event that no problem is reported by the system but the system breaks down and a service call is received, the customer support agent can inspect the database and analyze the usage statistics and patterns, along with the user's description of the problem(s), to narrow down the possible problems and solutions to speed up the time and reduce the cost of the fix. Failure modes and rates can determine how many parts warehouses and service centers should keep in inventory based on the number of systems in a certain geographic area. They can also inform the development of future products to make them more resilient and less likely to need repairs or need maintenance less often. A flowchart showing an example service management method described herein is shown in FIG. 13.

### Uniform Translation Operation and Safety Features

In some circumstances, a challenge of translating systems horizontally is to make the electronics, and motors flexible and adaptable to different floors and many different types of imperfections on floors. Floor levelness, flatness, hills, and valleys all affect how much torque is required to move the systems at different velocities, accelerations, and positions along the floor.

It was discovered that the torque requirements to move the system at a constant speed across all points of allowable travel may not be met if the stepper motors peak torque and current is limited below the necessary value (e.g., for safety reasons). As such, in some embodiments, the systems described herein rely on a particular mode of operation of a stepper motor driver which allows the stepper motor to have variable speed and slow down when the torque driving requirements cannot be met. This allows the motor to avoid stall or skipped steps and use the momentum of the system to get it through the higher load regions (e.g., floor inclines). Mapping the load across the floor to infer obstructions and safely stop is described in International Patent Application No. PCT/US2018/038742.

In vertically translating applications or applications with uniform load independent of positions, such as drop down beds, the variable speed mode of operation may not be required or desired. Instead, the stepper motors, currents, and torques can all be specified to the ideal values of the application. This allows for a smooth, constant speed of operation, which can improve the user experience. It also allows for other interesting features as well as safety implementations.

In International Patent Application No. PCT/US2018/038742, the operation and capabilities of an example stepper motor was described in detail. Three modes of operation were described: constant current, constant speed (sometimes referred to herein as classic mode); variable current, constant speed (sometimes referred to herein as coolStep); and constant current, variable speed (sometimes referred to herein dcStep). The reasons for choosing dcStep were described. dcStep, however, is not always the ideal mode of operation in uniform load translation operations, for example, a drop down bed.

Because a drop down bed (or, for purposes of the following description, any vertically translating furniture item or application) translates vertically and all the translation mechanics are self-contained, the load on the motor while the bed moves is constant. Therefore, a run current can be selected and the bed can move at a constant speed along all points of travel. The stepper motor torque can be capped depending on a maximum load that the motor can move (e.g., as preprogrammed). This can increase the safety of the system, as the bed will be unable to move if a person or heavy-enough object is on the bed.

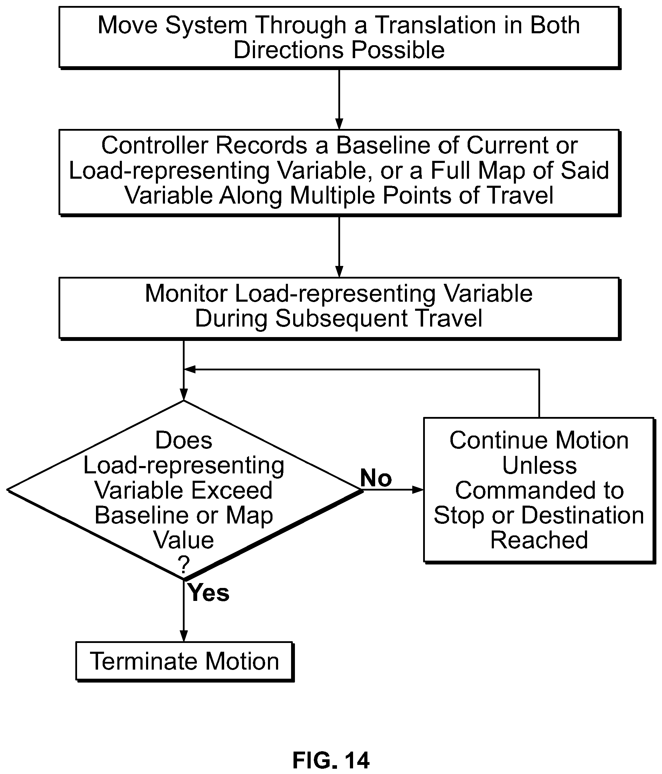

In some embodiments, CoolStep is also be an advantageous mode of operation. In coolStep, the bed moves at the desired constant speed and a minimum and maximum run current is specified. The stepper motor will use the minimum amount of current needed to move the bed. In a uniform load application, one would expect that the controller would self-select the current and the selection to depend directly on the weight of the mattress. This presents an opportunity to increase safety. Just like speed can be the variable representing load on the motor and monitored for safety purposes, current can also be the variable representing load on the motor and monitored for safety purposes. During the initial translation up and the initial translation down, the controller can monitor and record the current. One would expect the current to be constant or near constant each way, although the current translating up may be different from the current translating down. If, during a subsequent movement up, the driver starts outputting more current, the system can infer that something or someone is on the bed and stop the motion. If, during a subsequent movement down, the driver starts outputting more current, the system could infer that something or someone is under the bed and obstructing it and stop the motion.
An existing mapping algorithm for mapping speed can be adapted to map current. Because of uniformity, one would expect that the thresholds for this type of operation can be much smaller, and an obstruction can be inferred with less resistance force and more quickly. If the mattress were ever to change, a special command from a wired or wireless source could erase the baseline or map, and it could reset itself to the new weight of the mattress. If a non-uniform load was to start to appear in the system's operation, it could be a sign of mechanical degradation that can then be addressed through maintenance and repairs. This concept can be expanded to different type of motors and load-representing variables, as described in International Patent Application No. PCT/US2018/038742. A flowchart showing an example uniform translation method described herein is shown in FIG. 14.

### Tip Over Prevention

In some embodiments, the moveable items described herein can have a relatively high center of gravity. For tall objects with a shallow base and a high center of gravity, preventing tip over is an important safety feature. A good design can minimize the chances of a tip-over event, but often designers and engineers are constrained by dimensions and product requirements. In addition, a movable piece of furniture presents the challenge of added inertia when it is accelerating or decelerating that may create forces that tip-over potential of the furniture. Various aspects of the inventive features described herein include techniques for preventing tip over. Examples include: transferring the tip-over forces from the unstable furniture to a permanent structural member (floor or wall) and taking advantage of existing components in the design of the system, e.g., the guidance track or connector.

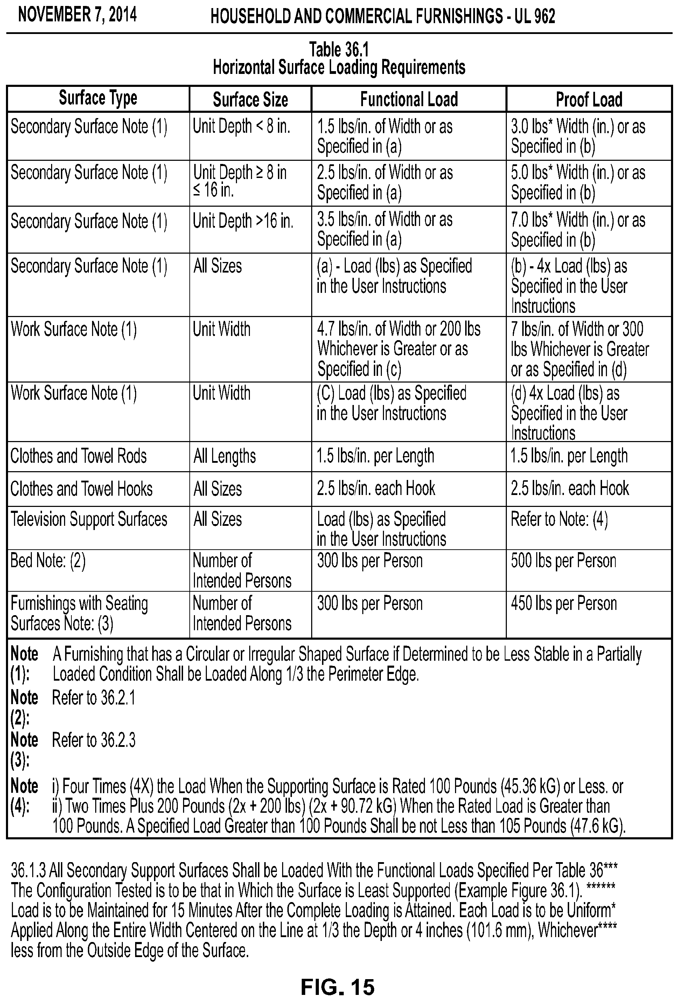

UL962, the safety standard for household furnishings, dedicates a whole section (38) to describe the product requirements for stability (see FIG. 15). For instance, the stability test for portable furnishing (38.3) states that the furniture is to be placed on an incline plane at an angle of 10 degrees to a level horizontal plane. The wheels shall be rotated to the least stable position and restricted from moving along the surface. The test shall be conducted with all the surfaces and shelves loaded with the functional load as described in section 36 (Structural Test Requirements for Furnishing). Moreover, according to the appurtenance stability test (38.6), all drawers and slide-outs must be extended and loaded with their respective functional loads; doors must be opened at a 90 degree angle and subjected to a 501b force applied in the downward direction for one minute. Finally, the force stability test (38.10) specifies that the furnishing shall be unloaded and is to be subjected to a gradually increasing horizontal force until either a 40-pound force is attained or the assembly inclines to an angle of 10 degrees without tipping over.

In order to pass these tests, the traditional approach is to anchor the closets to the wall using angled mounting brackets. This approach is not an option for movable elements. Instead, in some embodiments, the systems described herein use a different approach. The approach includes taking advantage of the long level arm that the guidance track provides in order to change the location of the tipping point and make it harder (e.g., require more torque) to tip it over. Using this approach, the only way for the system to tip over (assuming no failure in other parts of the system) is for the guidance track to be forcibly separated from its attachment to the wall or the floor. This approach enables transfer of the tip-over torque to the guidance track through the connector, while still keeping the Z axis freedom required for uneven floors.

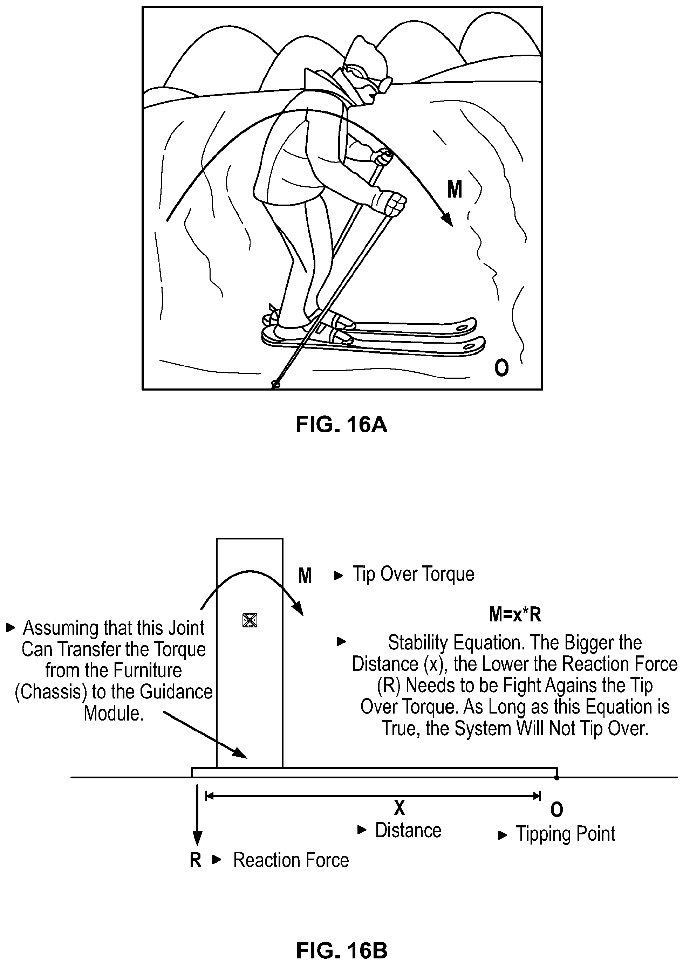

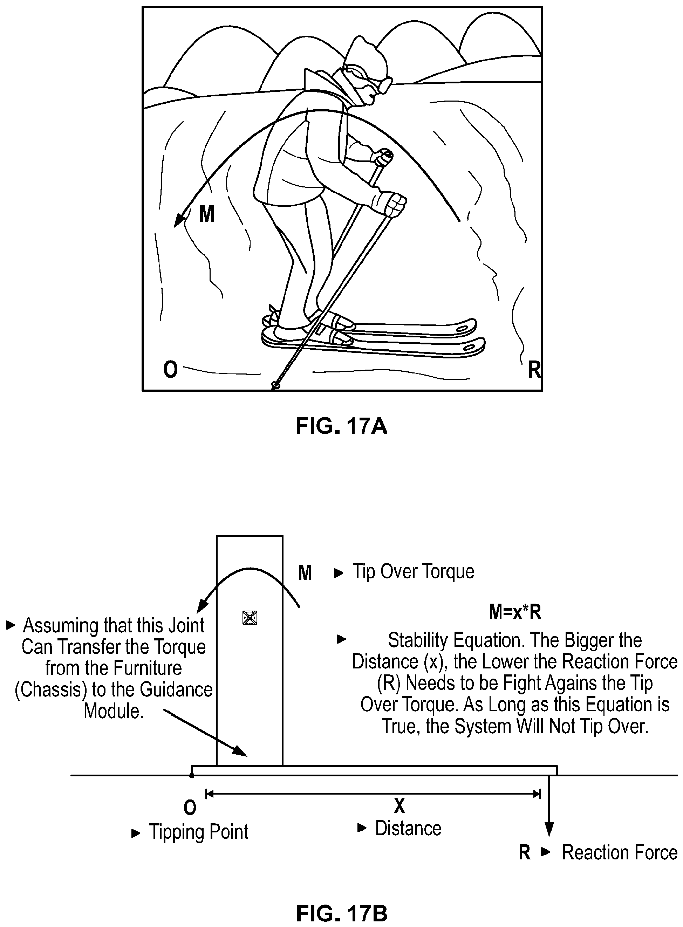

Once the torque is transferred to the guidance track, the length of the guidance track permits the torque to be distributed over a longer span because the tipping point is further from the anchoring point. The effect is analogous to a skier on skis: tipping forward is very hard (see FIGS. 16A-16B). Moreover, to extend the analogy, if the front of the skis were strongly fastened to the floor, e.g., glued, then tipping back is also very hard (see FIGS. 17A-17B). To complete the analogy, so long as the skis (guidance track) are rigid enough and the ski boots are well attached to the skis (attachment between the chassis and the guidance track is able to transfer the moment), it will be very hard for the skier (the furniture) to tip over. In addition, a secure and strong attachment between the structural member (floor and walls) and the guidance track is helpful to achieve this effect.

In general, the chassis and the guidance track can be attached using any known technique. As one nonlimiting example, there can be at least one carriage that runs inside the guidance track and is bolted to the main frame under the furniture. As mentioned above, in tip over scenario, it can be desirable to transfer the moment from the furniture to the track, which can be accomplished by a rigid attachment. As such, in some embodiments, a steel plate can be located under one, some, or all of the carriages, such that if the wheels pull out of the track the plate will catch the track and transfer the torque, so that the connection will only be broken if the aluminum track or steel plate are deformed.

### Operating Apparatus

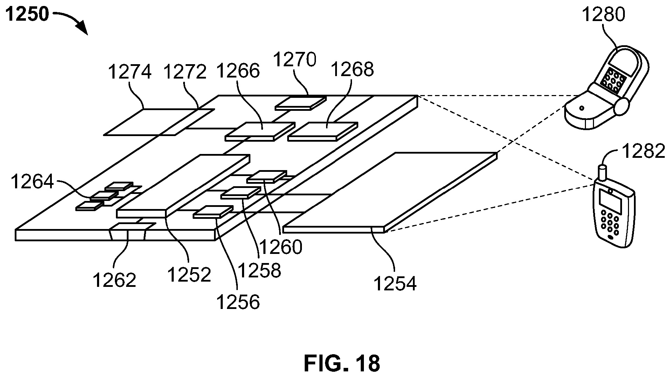

FIG. 18 shows an example of a generic computing device 1250, which may be used with the techniques described in this disclosure. Computing device 550 includes a processor 1252, memory 1264, an input/output device such as a display 1254, a communication interface 1266, and a transceiver 1268, among other components. The device 1250 may also be provided with a storage device, such as a microdrive or other device, to provide additional storage. Each of the components 1250, 1252, 1264, 1254, 1266, and 1268, are interconnected using various buses, and several of the components may be mounted on a common motherboard or in other manners as appropriate.

The processor 1252 can execute instructions within the computing device 1250, including instructions stored in the memory 1264. The processor may be implemented as a chipset of chips that include separate and multiple analog and digital processors. The processor may provide, for example, for coordination of the other components of the device 1250, such as control of user interfaces, applications run by device 1250, and wireless communication by device 1250.

Processor 1252 may communicate with a user through control interface 1258 and display interface 1256 coupled to a display 1254. The display 1254 may be, for example, a TFT LCD (Thin-Film-Transistor Liquid Crystal Display) or an OLED (Organic Light Emitting Diode) display, or other appropriate display technology. The display interface 1256 may comprise appropriate circuitry for driving the display 1254 to present graphical and other information to a user. The control interface 1258 may receive commands from a user and convert them for submission to the processor 1252. In addition, an external interface 1262 may be provided in communication with processor 1252, so as to enable near area communication of device 1250 with other devices. External interface 1262 may provide, for example, for wired communication in some implementations, or for wireless communication in other implementations, and multiple interfaces may also be used.

The memory 1264 stores information within the computing device 1250. The memory 1264 can be implemented as one or more of a computer-readable medium or media, a volatile memory unit or units, or a non-volatile memory unit or units. Expansion memory 1274 may also be provided and connected to device 1250 through expansion interface 1272, which may include, for example, a SIMM (Single In Line Memory Module) card interface. Such expansion memory 1274 may provide extra storage space for device 1250, or may also store applications or other information for device 1250. Specifically, expansion memory 1274 may include instructions to carry out or supplement the processes described above, and may include secure information also. Thus, for example, expansion memory 1274 may be provided as a security module for device 1250, and may be programmed with instructions that permit secure use of device 1250. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1264, expansion memory 1274, memory on processor 1252, or a propagated signal that may be received, for example, over transceiver 1268 or external interface 1262.

Device 1250 may communicate wirelessly through communication interface 1266, which may include digital signal processing circuitry where necessary. Communication interface 1266 may in some cases be a cellular modem. Communication interface 1266 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1268. In addition, short-range communication may occur, such as using a Bluetooth, WiFi, or other such transceiver (not shown). In addition, GPS (Global Positioning System) receiver module 1270 may provide additional navigation- and location-related wireless data to device 1250, which may be used as appropriate by applications running on device 1250.

Device 1250 may also communicate audibly using audio codec 1260, which may receive spoken information from a user and convert it to usable digital information. Audio codec 1260 may likewise generate audible sound for a user, such as through a speaker, e.g., in a handset of device 1250. Such sound may include sound from voice telephone calls, may include recorded sound (e.g., voice messages, music files, etc.) and may also include sound generated by applications operating on device 1250.

The computing device 1250 may be implemented in a number of different forms, as shown in FIG. 5. For example, it may be implemented as a cellular telephone 1280. It may also be implemented as part of a smartphone 1282, smart watch, personal digital assistant, or other similar mobile device.

### Operating Environment

Implementations of the subject matter and the operations described in this specification can be implemented in digital electronic circuitry, or in computer software, firmware, or hardware, including the structures disclosed in this specification and their structural equivalents, or in combinations of one or more of them. Implementations of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language resource), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Each numerical value presented herein is contemplated to represent a minimum value or a maximum value in a range for a corresponding parameter. Accordingly, when added to the claims, the numerical value provides express support for claiming the range, which may lie above or below the numerical value, in accordance with the teachings herein. Every value between the minimum value and the maximum value within each numerical range presented herein (including in the charts shown in the figures), is contemplated and expressly supported herein, subject to the number of significant digits expressed in each particular range. Absent express inclusion in the claims, each numerical value presented herein is not to be considered limiting in any regard.

Unless expressly described elsewhere in this application, as used herein, when the term "substantially" or "about" is before a quantitative value, the present disclosure also includes the specific quantitative value itself, as well as, in various cases, a ± 1%, ± 2%, ± 5%, and/or ± 10% variation from the nominal value unless otherwise indicated or inferred.

## Claims

1. A furniture item comprising:
a vertical wall structure;
a horizontal structure cantilevered off of the vertical wall structure and adapted to vertically translate along the vertical wall structure;
a translating element adapted to be translated by a motor;
at least one support structure attached to the translating element, wherein the translating element comprises the horizontal structure, wherein the at least one support structure is adapted to automatically extend upon translation of the translating element;
the motor configured to drive a pulley or a cable adapted to vertically translate the horizontal structure along the vertical wall structure, wherein upon loss of power to the motor, the at least one support structure is adapted to automatically extend to an extended position;
a pivot point about which the furniture item is configured to pivot upon application of a sufficient normal force to the horizontal structure, wherein a center of gravity of the furniture item is disposed in a location such that a normal force applied to the horizontal structure upon vertical translation of the horizontal structure under a normal operating condition is less than the sufficient normal force; and
a counterweight disposed adjacent to the vertical wall structure.

2. The furniture item of claim 1, wherein the vertical wall structure houses the motor.

3. The furniture item of claim 1 or claim 2, wherein the normal operating condition comprises a motor speed below a predetermined maximum motor speed and a motor acceleration or deceleration below a predetermined maximum motor acceleration or deceleration.

4. The furniture item of claim 1 or claim 2, wherein the normal operating condition comprises a weight on the horizontal structure being below a predetermined maximum weight.

5. The furniture item of any preceding claim, wherein the motor is adapted to backdrive when the normal force applied to the horizontal structure exceeds the sufficient normal force, such that the horizontal structure translates vertically without the furniture item pivoting about the pivot point.

6. A method of operating a furniture item, the method comprising:
obtaining a furniture item comprising:
a vertical wall structure;
a horizontal structure cantilevered off of the vertical wall structure;
a translating element adapted to be translated by a motor;
at least one support structure attached to the translating element, wherein
the translating element comprises the horizontal structure, wherein the at least one support structure is adapted to automatically extend upon translation of the translating element;
the motor configured to drive a pulley or a cable adapted to vertically translate the horizontal structure along the vertical wall structure,
wherein upon loss of power to the motor, the at least one support structure is adapted to automatically extend to an extended position;
a pivot point about which the furniture item is configured to pivot upon application of a sufficient normal force to the horizontal structure; and
a counterweight disposed adjacent to the vertical wall structure; and vertically translating the horizontal structure along the vertical wall structure under a normal operating condition such that a normal force is applied to the horizontal structure, wherein a center of gravity of the furniture item is disposed in a location such that the normal force is less than the sufficient normal force.

7. The method of claim 6, wherein the vertical wall structure houses the motor.

8. The method of claim 6 or claim 7, wherein the normal operating condition comprises a motor speed below a predetermined maximum motor speed and a motor acceleration or deceleration below a predetermined maximum motor acceleration or deceleration.

9. The method of claim 6 or claim 7, wherein the normal operating condition comprises a weight on the horizontal structure being below a predetermined maximum weight.

10. The method of any preceding claim, wherein the motor is adapted to backdrive when the normal force applied to the horizontal structure exceeds the sufficient normal force, such that the horizontal structure translates vertically without the furniture item pivoting about the pivot point.

11. The method of claim 6, or the furniture item of claim 1, wherein the horizontal structure comprises a bed.

12. The method of claim 6, or the furniture item of claim 1, further comprising at least one of a couch, a bedside table, and a desk disposed adjacent to the vertical structure and beneath the horizontal structure.

13. The method, or the furniture item of claim 12, wherein the pivot point is located at a point on at least one of the couch and the bedside table furthest from the vertical structure.

## Patentansprüche

1. Möbelstück, umfassend
eine vertikale Wandstruktur;
eine horizontale Struktur, die von der vertikalen Wandstruktur freitragend ist und dazu ausgelegt ist, sich vertikal entlang der vertikalen Wandstruktur zu verschieben;
ein Verschiebungselement, das dazu ausgelegt ist, von einem Motor verschoben zu werden;
mindestens eine Stützstruktur, die an dem Verschiebungselement angebracht ist, wobei das Verschiebungselement die horizontale Struktur umfasst, wobei die mindestens eine Stützstruktur dazu ausgelegt ist, bei Verschiebung des Verschiebungselements automatisch ausgefahren zu werden;
wobei der Motor dazu konfiguriert ist, eine Riemenscheibe oder ein Seil anzutreiben, die/das dazu ausgelegt ist, die horizontale Struktur vertikal entlang der vertikalen Wandstruktur zu verschieben, wobei bei einem Leistungsverlust des Motors die mindestens eine Stützstruktur dazu ausgelegt ist, automatisch in eine ausgefahrene Position ausgefahren zu werden;
einen Drehpunkt, um den das Möbelstück zum Drehen bei Ausübung einer ausreichenden Normalkraft auf die horizontale Struktur konfiguriert ist, wobei ein Schwerpunkt des Möbelstücks an einer Stelle angeordnet ist, sodass eine Normalkraft, die auf die horizontale Struktur bei einer vertikalen Verschiebung der horizontalen Struktur unter einer normalen Betriebsbedingung ausgeübt wird, geringer ist als die ausreichende Normalkraft; und
ein Gegengewicht, das benachbart zu der vertikalen Wandstruktur angeordnet ist.

2. Möbelstück nach Anspruch 1, wobei die vertikale Wandstruktur den Motor aufnimmt.

3. Möbelstück nach Anspruch 1 oder Anspruch 2, wobei die normale Betriebsbedingung eine Motorgeschwindigkeit unter einer vorbestimmten maximalen Motorgeschwindigkeit und eine Motorbeschleunigung oder -verlangsamung unter einer vorbestimmten maximalen Motorbeschleunigung oder -verlangsamung umfasst.

4. Möbelstück nach Anspruch 1 oder Anspruch 2, wobei die normale Betriebsbedingung umfasst, dass ein Gewicht auf der horizontalen Struktur unter einem vorbestimmten maximalen Gewicht liegt.

5. Möbelstück nach einem der vorhergehenden Ansprüche, wobei der Motor dazu ausgelegt ist, rückwärts angetrieben zu werden, wenn die Normalkraft, die auf die horizontale Struktur ausgeübt wird, die ausreichende Normalkraft überschreitet, sodass sich die horizontale Struktur vertikal verschiebt, ohne dass sich das Möbelstück um den Drehpunkt dreht.

6. Verfahren zum Betreiben eines Möbelstücks, wobei das Verfahren Folgendes umfasst:
Erhalten eines Möbelstücks, das Folgendes umfasst:
eine vertikale Wandstruktur;
eine horizontale Struktur, die von der vertikalen Wandstruktur freitragend ist;
ein Verschiebungselement, das dazu ausgelegt ist, von einem Motor verschoben zu werden;
mindestens eine Stützstruktur, die an dem Verschiebungselement angebracht ist, wobei das Verschiebungselement die horizontale Struktur umfasst, wobei die mindestens eine Stützstruktur dazu ausgelegt ist, bei Verschiebung des Verschiebungselements automatisch ausgefahren zu werden;
wobei der Motor dazu konfiguriert ist, eine Riemenscheibe oder ein Seil anzutreiben, die/das dazu ausgelegt ist, die horizontale Struktur vertikal entlang der vertikalen Wandstruktur zu verschieben, wobei bei einem Leistungsverlust des Motors die mindestens eine Stützstruktur dazu ausgelegt ist, automatisch in eine ausgefahrene Position ausgefahren zu werden;
einen Drehpunkt, um den das Möbelstück zum Drehen bei Ausübung einer ausreichenden Normalkraft auf die horizontale Struktur konfiguriert ist; und
ein Gegengewicht, das benachbart zu der vertikalen Wandstruktur angeordnet ist und die horizontale Struktur vertikal entlang der vertikalen Wandstruktur unter einer normalen Betriebsbedingung verschiebt, sodass eine Normalkraft auf die horizontale Struktur ausgeübt wird, wobei ein Schwerpunkt des Möbelstücks an einer derartigen Stelle angeordnet ist, dass die Normalkraft geringer als die ausreichende Normalkraft ist.

7. Verfahren nach Anspruch 6, wobei die vertikale Wandstruktur den Motor aufnimmt.

8. Verfahren nach Anspruch 6 oder Anspruch 7, wobei die normale Betriebsbedingung eine Motorgeschwindigkeit unter einer vorbestimmten maximalen Motorgeschwindigkeit und eine Motorbeschleunigung oder -verlangsamung unter einer vorbestimmten maximalen Motorbeschleunigung oder -verlangsamung umfasst.

9. Verfahren nach Anspruch 6 oder Anspruch 7, wobei die normale Betriebsbedingung umfasst, dass ein Gewicht auf der horizontalen Struktur unter einem vorbestimmten maximalen Gewicht liegt.

10. Verfahren nach einem der vorhergehenden Ansprüche, wobei der Motor dazu ausgelegt ist, rückwärts angetrieben zu werden, wenn die Normalkraft, die auf die horizontale Struktur ausgeübt wird, die ausreichende Normalkraft überschreitet, sodass sich die horizontale Struktur vertikal verschiebt, ohne dass sich das Möbelstück um den Drehpunkt dreht.

11. Verfahren nach Anspruch 6 oder Möbelstück nach Anspruch 1, wobei die horizontale Struktur ein Bett umfasst.

12. Verfahren nach Anspruch 6 oder Möbelstück nach Anspruch 1, ferner umfassend mindestens eines von einer Couch, einem Nachttisch und einem Tisch, die/der benachbart zu der vertikalen Struktur und unter der horizontalen Struktur angeordnet ist.

13. Verfahren oder Möbelstück nach Anspruch 12, wobei sich der Drehpunkt an einem Punkt auf mindestens einem von der Couch und dem Nachttisch am weitesten von der vertikalen Struktur entfernt befindet.

## Revendications

1. Article d'ameublement comprenant
une structure de paroi verticale ;
une structure horizontale en porte-à-faux par rapport à la structure de paroi verticale et adaptée pour se translater verticalement le long de la structure de paroi verticale ;
un élément de translation adapté pour être translaté par un moteur ;
au moins une structure de support fixée à l'élément de translation, dans lequel l'élément de translation comprend la structure horizontale, dans lequel l'au moins une structure de support est adaptée pour s'étendre automatiquement lors de la translation de l'élément de translation ;
le moteur configuré pour entraîner une poulie ou un câble adapté pour translater verticalement la structure horizontale le long de la structure de paroi verticale, dans lequel lors d'une perte de puissance du moteur, l'au moins une structure de support est adaptée pour s'étendre automatiquement vers une position étendue ;
un point de pivot autour duquel l'article d'ameublement est configuré pour pivoter lors de l'application d'une force normale suffisante à la structure horizontale, dans lequel un centre de gravité de l'article d'ameublement est disposé dans un emplacement tel qu'une force normale appliquée à la structure horizontale lors d'une translation verticale de la structure horizontale sous une condition de fonctionnement normale est inférieure à la force normale suffisante ; et
un contrepoids disposé de manière adjacente à la structure de paroi verticale.

2. Article d'ameublement selon la revendication 1, dans lequel la structure de paroi verticale loge le moteur.

3. Article d'ameublement selon la revendication 1 ou la revendication 2, dans lequel la condition de fonctionnement normale comprend une vitesse de moteur inférieure à une vitesse de moteur maximale prédéterminée et une accélération ou décélération de moteur inférieure à une accélération ou décélération de moteur maximale prédéterminée.

4. Article d'ameublement selon la revendication 1 ou la revendication 2, dans lequel la condition de fonctionnement normale comprend un poids sur la structure horizontale qui est inférieur à un poids maximal prédéterminé.

5. Article d'ameublement selon l'une quelconque des revendications précédentes, dans lequel le moteur est adapté pour réaliser un entraînement par l'arrière lorsque la force normale appliquée à la structure horizontale dépasse la force normale suffisante, de telle sorte que la structure horizontale se translate verticalement sans que l'article d'ameublement ne pivote autour du point de pivot.

6. Procédé d'utilisation d'un article d'ameublement, le procédé comprenant :
l'obtention d'un article d'ameublement comprenant :
une structure de paroi verticale ;
une structure horizontale en porte-à-faux par rapport à la structure de paroi verticale ;
un élément de translation adapté pour être translaté par un moteur ;
au moins une structure de support fixée à l'élément de translation, dans lequel l'élément de translation comprend la structure horizontale, dans lequel l'au moins une structure de support est adaptée pour s'étendre automatiquement lors de la translation de l'élément de translation ;
le moteur configuré pour entraîner une poulie ou un câble adapté pour translater verticalement la structure horizontale le long de la structure de paroi verticale, dans lequel lors d'une perte de puissance du moteur, l'au moins une structure de support est adaptée pour s'étendre automatiquement vers une position étendue ;
un point de pivot autour duquel l'article d'ameublement est configuré pour pivoter lors de l'application d'une force normale suffisante à la structure horizontale ; et
un contrepoids disposé de manière adjacente à la structure de paroi verticale, et la translation verticale de la structure horizontale le long de la structure de paroi verticale sous une condition de fonctionnement normale de telle sorte qu'une force normale est appliquée à la structure horizontale, dans lequel un centre de gravité de l'article d'ameublement est disposé dans un emplacement tel que la force normale est inférieure à la force normale suffisante.

7. Procédé selon la revendication 6, dans lequel la structure de paroi verticale loge le moteur.

8. Procédé selon la revendication 6 ou la revendication 7, dans lequel la condition de fonctionnement normale comprend une vitesse de moteur inférieure à une vitesse de moteur maximale prédéterminée et une accélération ou décélération de moteur inférieure à une accélération ou décélération de moteur maximale prédéterminée.

9. Procédé selon la revendication 6 ou la revendication 7, dans lequel la condition de fonctionnement normale comprend un poids sur la structure horizontale qui est inférieur à un poids maximal prédéterminé.

10. Procédé selon l'une quelconque des revendications précédentes, dans lequel le moteur est adapté pour réaliser un entraînement par l'arrière lorsque la force normale appliquée à la structure horizontale dépasse la force normale suffisante, de telle sorte que la structure horizontale se translate verticalement sans que l'article d'ameublement ne pivote autour du point de pivot.

11. Procédé selon la revendication 6, ou article d'ameublement selon la revendication 1, dans lequel la structure horizontale comprend un lit.

12. Procédé selon la revendication 6, ou article d'ameublement selon la revendication 1, comprenant en outre au moins l'un parmi un canapé, une table de chevet et un bureau disposé de manière adjacente à la structure verticale et au-dessous de la structure horizontale.

13. Procédé, ou article d'ameublement selon la revendication 12, dans lequel le point de pivot est situé au niveau d'un point sur l'au moins un parmi le canapé et la table de chevet le plus éloigné de la structure verticale.
